(19) Europäisches Patentamt
European Patent Office
Office européen des brevets

(11) **EP 2 832 239 B1**

(12) **EUROPEAN PATENT SPECIFICATION**

(45) Date of publication and mention of the grant of the patent:
**27.06.2018 Bulletin 2018/26**

(51) Int Cl.:
*A23L 33/00* (2016.01)     *A23L 35/00* (2016.01)
*A23P 30/40* (2016.01)

(21) Application number: **13769973.2**

(22) Date of filing: **22.03.2013**

(86) International application number:
**PCT/JP2013/058435**

(87) International publication number:
**WO 2013/146618 (03.10.2013 Gazette 2013/40)**

(54) **PACKAGED SOLID FOOD AND MANUFACTURING METHOD THEREFOR**

VERPACKTES FESTES NAHRUNGSMITTEL UND HERSTELLUNGSVERFAHREN DAFÜR

ALIMENT SOLIDE EMBALLÉ, ET PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2012 JP 2012074618**

(43) Date of publication of application:
**04.02.2015 Bulletin 2015/06**

(73) Proprietor: **Daiwa Can Company**
**Tokyo 100-7009 (JP)**

(72) Inventors:
• **BATORI, Hiroshi**
**Sagamihara-shi**
**Kanagawa 252-5183 (JP)**
• **AKACHI, Toshiyuki**
**Sagamihara-shi**
**Kanagawa 252-5183 (JP)**
• **HASHIMOTO, Shintarou**
**Sagamihara-shi**
**Kanagawa 252-5183 (JP)**
• **TANOUE, Minami**
**Sagamihara-shi**
**Kanagawa 252-5183 (JP)**
• **KAKUMA, Takafumi**
**Sagamihara-shi**
**Kanagawa 252-5183 (JP)**

(74) Representative: **Delorme, Nicolas et al**
**Cabinet Germain & Maureau**
**BP 6153**
**69466 Lyon Cedex 06 (FR)**

(56) References cited:
JP-A- 2005 229 879    JP-A- 2005 287 326
JP-A- 2008 141 994    JP-A- 2011 105 702
US-A- 5 368 877      US-A1- 2008 311 174
US-A1- 2011 274 810

• MISAO NAKAJO: 'Development of Food for Special Use. Development of Food for Supporting Care and the Elderly.' FOOD PROCESSING AND INGREDIENTS vol. 34, no. 1, 1999, pages 15 - 18, XP008174492
• TOMOKO TAKAHASHI ET AL.: 'Nencho na Mousse-jo Shokuhin no Rikigakuteki Tokusei, Nomikomi Tokusei to Zetsuundo no Kankei' JAPAN SOCIETY OF HOME ECONOMICS TAIKAI KENKYU HAPPYO YOSHISHU vol. 52, 2000, page 154, XP008174721
• MAMI SATO ET AL.: 'Classification and Proposed Criteria for Diets Supplied to Facilities for the Elderly with Dysphasia' EIYOGAKU ZASSHI vol. 68, no. 2, 2010, pages 110 - 116, XP055165670

**Description**

[Technical Field]

The present invention relates to an encased solid food and a method for manufacturing the same.

[Background Art]

Conventionally, there has been provided an encased food which contains an ingredient, such as a vegetable that can easily collapse during cooking, along with a seasoning liquid in a sealed state, to prevent the ingredient from collapsing during transportation.

In recent years, as a care food for elderly people or the like who have difficulty in chewing and swallowing, there is distributed a food that has been produced by grinding a solid food and then solidifying and reshaping it in a mousse-form state. Such a mousse-form food is good in appearance and is soft enough to easily swallow.

The hardness of care foods is prescribed in a standard of Universal Design Food. This hardness is set at a hardness of $5\times10^4$ N/m$^2$ or less or a hardness of $2\times10^4$ N/m$^2$ or less, depending on the situation of swallowing. Mousse-like foods according to this hardness are very soft. Particularly, mousse-form foods made from a protein, such as egg albumen, and/or a starch, such as dextrin, are less elastic and can more easily collapse, as compared with foods made from gelatin, when they have the same hardness. Accordingly, mousse-form foods of this type are distributed in a frozen state in general. Frozen mousse-form foods are thawed and then served for eating.

[Prior Art Reference]

[Patent Document]

It is already known from document JP2005/229879 a method for preparing a meal easy to swallow that comprises highly nutritious jelly food and containing at least 5g of protein each per 100g of a product that has to be brought into contact with liquid seasoning having viscosity of 5*10-2 to 50 Pa.s. Document JP2005/287326 depicts a cooked meat processed food comprising flesh meat and seafood meat, soybean protein, a peptide mixture and water, and having a certain shape and hardness of 5x10$^5$ N/m$^2$ to 5x10$^3$ N/m$^2$.

[Patent Document 1] Jpn. Pat. Appln. KOKAI Publication No. 2006-55076
[Patent Document 2] Jpn. Pat. Appln. KOKAI Publication No. 2006-304719

[Summary of the Invention]

[Problem to be Solved by the Invention]

An object of the present invention is to provide an encased mousse-form food that does not require freezing for distribution.

[Means for Solving the Problem]

According to the present invention, there is provided an encased mousse-form solid food. The encased mousse-form solid food comprises a container with an opening, a mousse-form solid body contained inside the container, a viscous liquid contained inside the container and covering a circumference of the mousse-form solid body, and a lid (6) attached to the opening of the container. The mousse-form solid body has a hardness of $1.0\times10^4$ N/m$^2$ or more and $5.0\times10^4$ N/m$^2$ or less. The viscous liquid has a viscosity of 0.5 Pa·s or more and 10.0 Pa·s or less, wherein, where the viscosity of the viscous liquid denoted by T [Pa*s], and the hardness of the mousse-form solid body (4) is expressed by Hx10$^4$ [N/m$^2$], a following formula is satisfied within a range of 1.0≤H≤2.0, T≥-H+2.5 (Formula I), or a following formula is satisfied within a range of 2.0<H≤5.0, T≥0.5.

[Advantageous Effect of Invention]

According to one embodiment, there is provided an encased mousse-form food that does not require freezing for distribution.

[Brief Description of the Drawings]

[FIG. 1] FIG. 1 comprises views illustrating an example of an encased mousse-form solid food.
[FIG. 2] FIG. 2 comprises graphs showing the hardness of mousse-form solid bodies.
[FIG. 3] FIG. 3 comprises model graphs showing the hardness of mousse-form solid bodies and other foods.

[Mode for Carrying out the Invention]

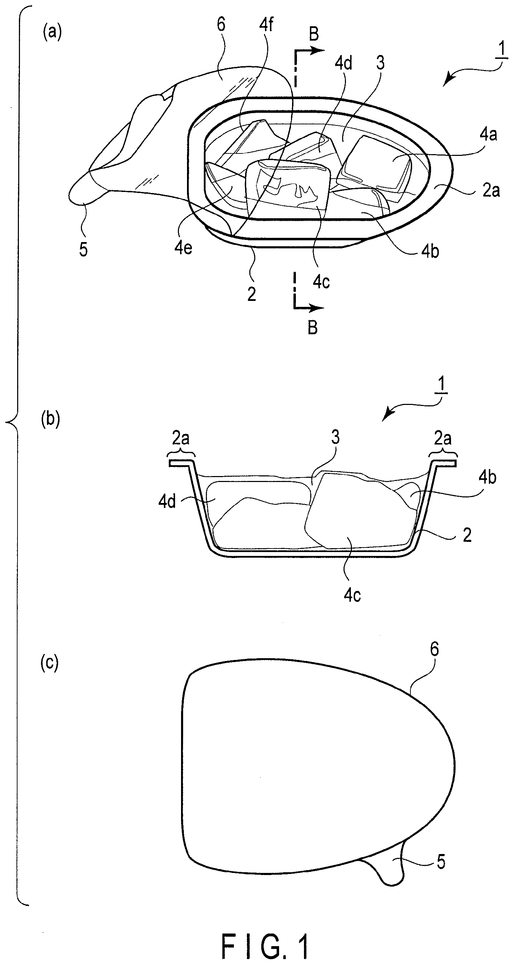

Now, an explanation will be given of an example of an encased mousse-form food according to an embodiment, with reference to (a), (b), and (c) of FIG. 1. In FIG. 1, (a) is a perspective view illustrating an encased mousse-form food. In FIG. 1, (b) is a sectional view taken along a line B-B. In FIG. 1, (c) is a plan view illustrating a lid.

The encased mousse-form food 1 comprises a container 2 including an opening and a flange 2a formed around the opening. The container 2 contains mousse-form solid bodies 4a to 4f put therein. Further, the container 2 contains a viscous liquid 3 that covers the circumference of each of the mousse-form solid bodies 4a to 4f. A lid 6 including a tongue portion 5 is attached to the flange 2a of the container 2, so that the mousse-form solid bodies 4a to 4f and the viscous liquid 3 are sealed inside the container 2. In FIG. 1, (a) illustrates an example where the lid 6 is made of a transparent plastic film.

Before being served for eating, the lid 6 is removed from the container 2 by a user with fingers picking up the tongue portion 5. In FIG. 1, (a) illustrates a state where the lid 6 is partly detached from the flange 2a of the container 2.

In FIG. 1, (a) and (b) illustrate the plurality of mousse-form solid bodies 4a to 4f, but only one or more than one mousse-form solid bodies may be contained inside the container 2. Hereinafter, the mousse-form solid bodies 4a to 4f are collectively mentioned as a mousse-form solid body 4. In the case where a plurality of mousse-form solid bodies 4 are contained inside the container 2, these mousse-form solid bodies 4 may be of different types or may be of the same type.

The mousse-form solid body 4 has a hardness of $1.0 \times 10^4$ N/m$^2$ or more and $5.0 \times 10^4$ N/m$^2$ or less. The mousse-form solid body 4 is easy for a consumer to swallow.

For example, the mousse-form solid body 4 is produced as follows: At first, materials are selected. The materials may be selected from animal food materials and vegetable food materials. For example, the materials may be meats, fish and shellfish, cereals, vegetables, seaweed, fruits, nuts and/or insects, or may be any of the substances used as food materials in general.

For example, the selected materials are ground to form material particles. A binding agent is added to the material particles, and they are mixed with each other, and heated as needed, to form a mousse-form solid body 4 having a specific hardness. Depending on the type of the binding agent, a process, such as heating, may be performed after stirring.

For example, the binding agent may be at least one selected from the group consisting of egg albumen, starch, and dextrin.

In the case of egg albumen and/or starch and/or dextrin, it is preferable to perform a heating process by steaming under conditions including a temperature of 70 to 80°C and a humidity of 100%, for example. In this case, it suffices if the heating time is a time period sufficient to make the temperature of the mousse-form solid body uniform up to the inside and to solidify the mousse-form solid body over the entirety thereof. Thereafter, the mousse-form solid body may be cooled at room temperature or at a lower temperature, and/or cooled in water. Due to this heating, the final product or food may contain egg albumen and/or starch and/or dextrin in a thermally denatured state.

Further, before, during, or after the time period of mixing the material particles with the binding agent, they may be further mixed with desired additives, such as substances used for foods in general, which are, for example, seasonings, such as salt, sugar, soy sauce, and vinegar, and/or food additives, such as oil, thickener, perfume, and red food coloring.

The hardness of the mousse-form solid body 4 may be measured by use of an apparatus that can measure the compression stress of a substance by linear motion, along with a compression speed of 10 mm/sec and a measurement temperature of $20 \pm 2$°C. This measurement is performed by use of a plunger having a diameter of, e.g., 3 mm, under a clearance of, e.g., 3 mm.

Further, the mousse-form solid body 4 provides smooth palate feeling when being eaten. This smooth palate feeling of the mousse-form solid body 4 may be achieved by reducing the diameter of the material particles contained in the mousse-form solid body. The material particles contained in the mousse-form solid body 4 may have a diameter of 1.5 mm, 0.5 mm or less, or 0.3 mm or less, and preferably of 0.1 mm or less.

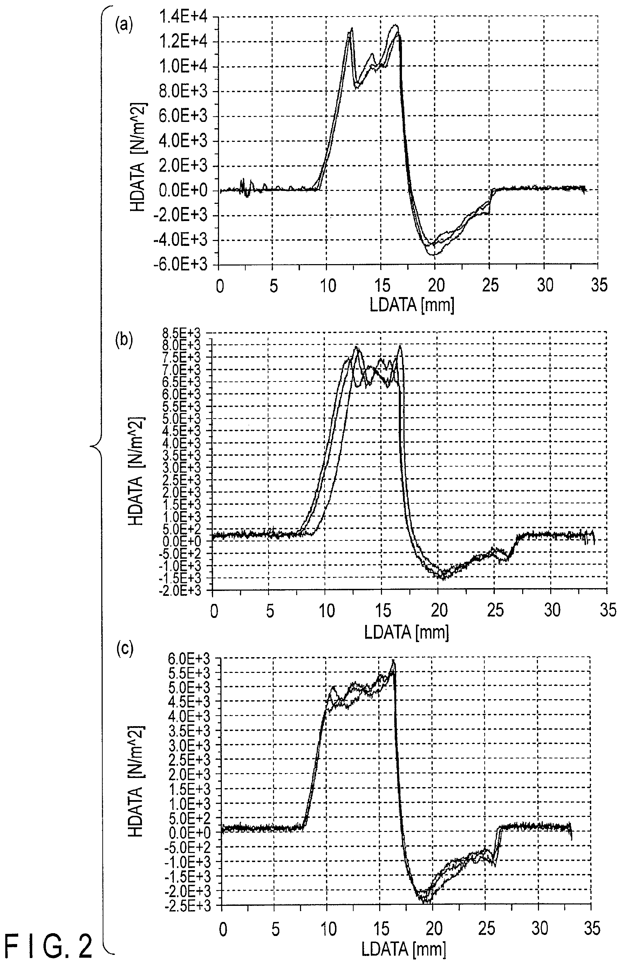

FIG. 2 shows results of measurement performed on three examples of different types of the mousse-form solid body 4 by use of the above-described apparatus. The measurement was performed as follows: Each mousse-form solid body was cut to have a thickness of 1 cm, and then its hardness was measured in TENSIPRESSER My Boy II system

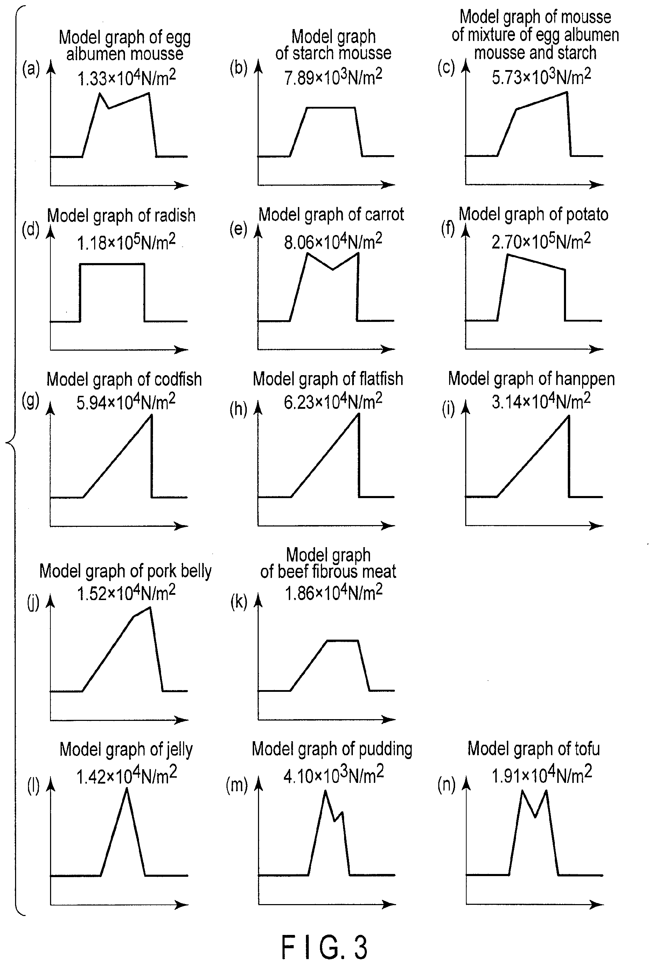

(manufactured by Taketomo Electric Inc.), by use of a plunger having a diameter of 3 mm, along with a measurement temperature of 20±2°C, a compression speed of 10 mm/sec, and a clearance of 30% of the sample thickness, i.e., a clearance of 3 mm. In the graphs (a), (b), and (c) of FIG. 2, the vertical axis denotes the stress and the horizontal axis denotes the plunger travel distance. Model graphs were formed from these graphs and are shown in (a), (b), and (c) of FIG. 3. Thus, the model graphs (a), (b), and (c) of FIG. 3 correspond respectively to graphs (a), (b), and (c) of FIG. 2. Further, for reference, FIG. 3 includes model graphs obtained in the same way from the following foods: (d) boiled radish, (e) boiled carrot, (f) boiled potato, (g) boiled codfish, (h) boiled flatfish, (i) boiled hanppen, (j) boiled pork belly, (k) boiled beef fibrous meat, (1) jelly, (m) pudding, and (n) firm tofu. The stress numerical value indicated in each of the model graphs denotes the stress maximum value in the model graph.

The mousse-form solid body 4 has a hardness almost uniform over the entirety thereof. Immediately after a physical force is applied to the mousse-form solid body 4, the rising of stress is gradual and constant. On the other hand, an appropriate stress needs to be applied to press and crush the mousse-form solid body 4.

The viscous liquid 3 has a viscosity of 0.5 Pa·s or more and 10.0 Pa·s or less, and preferably of 1.5 Pa·s or more and 2.0 Pa·s or less. The relationship between the hardness of the mousse-form solid body 4 and the viscosity of the viscous liquid 3 satisfies the condition defined by the following Formula I or Formula II, where the viscosity of the viscous liquid 3 is denoted by T and the hardness of the mousse-form solid body 4 is expressed by $H \times 10^4$ N/m$^2$.

In the case where the hardness of the mousse-form solid body 4 is within $1.0 \leq H \leq 2.0$, the following formula is satisfied.

$$T \geq -H+2.5 \quad \text{(Formula I)}$$

In the case where the hardness of the mousse-form solid body 4 is within $2.0 < H \leq 5.0$, the following formula is satisfied.

$$T \geq 0.5$$

The viscosity was measured by use of a B-type rotational viscometer, in which the rotor was rotated at a specific number of revolutions, such as 12 rpm, and the indicated value was read after two minutes. This value was multiplied by a corresponding count, and the resultant value thus obtained was expressed with "Pa·s". This measurement may be performed at a temperature of 20±2°C.

Since the circumference of the mousse-form solid body 4 is entirely covered with the viscous liquid 3 having such a viscosity, the mousse-form solid body 4 is prevented from collapsing during transportation.

For example, the ratio between the total volume of the viscous liquid 3 and the total volume of the mousse-form solid body 4 inside the container 2 may be set at 2:8 to 5:5 and preferably at 3:7 to 4:6. The total volume of the mousse-form solid body 4 mentioned here means the total of the volumes of all the mousse-form solid bodies 4 contained inside the container 2. Specifically, when a single mousse-form solid body 4 is contained inside one container 2, the total volume is the volume of this single mousse-form solid body 4. On the other hand, when a plurality of mousse-form solid bodies 4 are contained inside one container 2, the total volume is the total of the respective volumes of the plurality of mousse-form solid bodies 4. With an increase in the total volume of the mousse-form solid body 4, in relation to the ratio between the viscous liquid 3 and the mousse-form solid body 4, the mousse-form solid body 4 becomes less apt to collapse. This is because the movable range of the mousse-form solid body 4 inside the container 2 becomes smaller, with an increase in the total volume of the mousse-form solid body 4. However, if the viscous liquid 3 is too little, it becomes difficult to provide a function as a seasoning liquid. On the other hand, if the viscous liquid 3 is too much, the mousse-form solid body 4 is given a larger movable range and becomes more apt to collapse. Further, in this case, since the ingredient looks smaller, the appearance becomes poorer.

The viscous liquid 3 may be prepared as follows: For example, the viscous liquid 3 is obtained by adding a thickening stabilizer to a seasoning liquid containing water and seasonings, and then mixing them with each other. Depending on the type of the thickening stabilizer, a process necessary for dissolution, such as warming and/or stirring, may be performed. Further, in order to obtain a specific viscosity, a process, such as warming, cooling, stirring, and/or pH-adjusting, may be performed.

Although not limiting, an example of the thickening stabilizer is pectin, guar gum, xanthan gum, tamarind gum, carrageenan, carboxymethylcellulose, tara gum, locust bean gum, curdlan, gelatin, agar, sodium alginate, psyllium seed gum, gellan gum, Arabic gum, karaya gum, chitin, chitosan, arabinogalactan, welan gum, sesbania gum, Aloe vera extract, Erwinia mitsuensis gum, daruman resin, ghatti gum, elemi resin, dextran, enterobacter simanus gum, enterobacter gum, triacanthos gum, oligoglucosamine, Abelmoschus manihot, microfibrous cellulose, tragacanth gum, Bacillus subtilis natto gum, Gloiopeltis furcata extract, furcellaran, cassia gum, macrophomopsis gum, pullulan, Aloe arborescens extract, peach resin, Aureobasidium culture solution, guar gum enzymolysis product, ramsan gum, aeromonas gum, glucosamine, levan, Agrobacterium succinoglycan, yeast cell film, linseed gum, Azotobacter vinelandii gum, Artemisia seed gum, almond gum, and/or sclero gum.

The thickening stabilizer may be selected in consideration of the properties of respective thickening stabilizers, as shown in TABLE 1, the other component composition contained in the viscous liquid, and/or whether the encased mousse-form solid food is to be heated before being served for eating.

TABLE 1

| Type and Feature of Thickening Stabilizer | | | | | |
|---|---|---|---|---|---|
| Type of thickening stabilizer | Acid resistance | Alkali resistance | Heat resistance | Flow viscosity | Solubility in water |
| Guar gum | Δ | ○ | Δ | Pseudoplastic | Soluble even in cold water |
| Xanthan gum | ○ | ○ | ○ | Pseudoplastic | Soluble even in cold water |
| Tamarind gum | ○ | ○ | ○ | Newtonian viscous | Soluble by heating |
| Carrageenan | Δ | ○ | ○ | Thixotropic Iota type is pseudoplastic Lambda type is pseudoplastic | Only $\lambda$ is soluble The others are soluble by warming |
| Tara gum | Δ | ○ | ○ | - | Soluble by warming |
| Locust bean gum | ○ | ○ | ○ | Pseudoplastic | Soluble by warming |
| Sodium alginate | Turned into alginic acid by acidity and forming gel | × | ○ | Pseudoplastic close to Newtonian viscous | Soluble even in cold water |
| Gellan gum | ○ | ○ | ○ | Pseudoplastic | Soluble by warming |
| ○: Yes ×: No Δ: Yes in some cases - : No data | | | | | |

Preferably, the thickening stabilizer is pectin, guar gum, xanthan gum, tamarind gum, carrageenan, carboxymethylcellulose, tara gum, locust bean gum, curdlan, gelatin, agar, sodium alginate, psyllium seed gum, gellan gum, Arabic gum, karaya gum, chitin, and/or chitosan. More preferably, the thickening stabilizer is xanthan gum, guar gum, tamarind gum, tara gum, gellan gum, and/or sodium alginate. Most preferably, the thickening stabilizer is xanthan gum.

The container 2 may be any one of a plastic container, metal container, glass container, ceramic container, and waterproof paper container, as long as the container can maintain a certain form during its manufacture, transportation, and use for, e.g., eating.

The container 2 may be a container having any shape selected from well known ones, such as a cup type, bowl type, and ship type; a cylindrical shape with an opening; a circular column shape, polygonal column shape, circular cone shape, and polygonal cone shape, each of which is hollow; and a circular cone shape and polygonal cone shape, each of which is truncated and hollow. The container 2 may be produced by use of any technique selected from well known ones, in accordance with a material and shape selected for the container.

The lid 6 is a member that covers the opening of the container 2 to seal the mousse-form solid body 4 and the viscous liquid 3 contained inside the container 2. It suffices if the lid 6 at least has a shape and size necessary for covering the entirety of the opening of the container 2. In the example described above, the lid 6 includes the tongue portion 5, but the tongue portion 5 may be omitted. Further, the size of the lid 6 may be set to be larger than the circumference of the flange 2a of the container 2. In this case, a user can pull away the lid 6 from the container 2 by holding, with fingers, that part of the lid 6 which extends outward from the flange 2a.

The lid 6 may be made of a material the same as that of the container 2 or different from that of the container 2. The material of the lid 6 may be selected from plastic, metal, glass, ceramic, and waterproof paper. The lid 6 may be attached to the container 2 by any one of adhering, fitting, heat sealing, double seaming, screw cap, and wax sealing.

For example, an encased mousse-form solid food may be manufactured as follows: Materials are ground into particles having a diameter of 0.1 mm or less and thereby turned into a paste. Egg albumen and/or starch are added to the paste thus formed, and they are mixed with each other. The resultant mixture is heated, and a mousse-form solid body is thereby obtained. A seasoning liquid is provided. The seasoning liquid is set to have a viscosity of 0.5 Pa·s or more and 10.0 Pa·s or less, and a viscous liquid is thereby prepared. The viscous liquid and the mousse-form solid body are put in a container. A lid is attached to the container.

The encased mousse-form solid food 1 may be provided as any one of a side dish, main dish, and confectionery.

According to the present invention, there is provided an encased mousse-form food that does not require freezing for distribution. In general, a nursing facility or the like accommodates a lot of persons to be nursed, and so it needs to provide a large quantity of meal at a time. In the case of conventional foods that are distributed in a frozen state and are thawed before being served for eating, a large amount of labor is required for the thawing operation. On the other hand, the encased mousse-form solid food according to the present invention can be distributed in an unfrozen state, and thus can be served for eating only by removing the lid, for example. Further, since the mousse-form solid body is used, the encased mousse-form solid food makes it possible for consumers to enjoy even the taste of a food having a complicated feature using various materials. In this case, it is possible to easily manufacture such an encased mousse-form solid food. Further, even in the case of a cuisine that requires labor for cooking, such as a simmered dish, the encased mousse-form solid food makes it possible to reproduce the taste of the cuisine without damaging the taste, while keeping the tastes of respective materials. Also in this case, it is possible to easily manufacture such an encased mousse-form solid food. Thus, the encased mousse-form solid food makes it possible for consumers to enjoy even the taste of a cuisine that requires labor.

The present invention is more effective to prevent a food comprising a very soft solid body of $5.0 \times 10^4$ N/m$^2$ or less from collapsing. Particularly, the present invention is highly effective to prevent a food comprising a solid body formed of protein or starch from collapsing.

The encased mousse-form solid food according to the present invention utilizes the viscosity of the liquid to reduce vibration during transportation and to prevent the solid food from moving inside the container. Accordingly, it is possible to prevent the mousse-form solid body from collapsing, which can be caused when the mousse-form solid body comes into contact with the inner surface of the container, or when mousse-form solid bodies come into contact with each other. Further, since the food can be prevented from collapsing by a necessary minimum viscosity, the viscous thickness becomes minimally influential even in the case where the food is applied to a type that is not preferably thickened.

[Example]

1. Mousse-form solid body

1) Dried egg albumen mousse

Dried egg albumen (dried egg albumen W-type produced by Kewpie Egg Corporation) was dissolved by mixing and stirring it with water. The object thus obtained was put in a container serving as a heat-proof mold, such as a cake mold, and was hardened by steaming for 25 minutes in a steamer (Healsio manufactured by Sharp Corporation). The object thus hardened was cooled, and then cut into a size of $20 \times 20 \times 7$ mm. This resultant product was defined as a mousse-form solid body according to a present example 1.

In the process described above, the added amount of the dried egg albumen employed there was varied at weight percent concentrations of 7.29, 7.49, 7.69, 8.08, 8.28, and 11.24. The mousse-form solid bodies thus obtained respectively had hardnesses of $1.0 \times 10^4$ N/m$^2$, $1.2 \times 10^4$ N/m$^2$, $1.4 \times 10^4$ N/m$^2$, $1.8 \times 10^4$ N/m$^2$, $2.0 \times 10^4$ N/m$^2$, and $5.0 \times 10^4$ N/m$^2$. These mousse-form solid bodies were respectively defined as a sample 1, sample 2, sample 3, sample 4, sample 5, and sample 6.

The hardness of each of these mousse-form solid bodies was measured in a texture meter (TENSIPRESSER My Boy II system manufactured by Taketomo Electric Inc.). The measurement was performed under conditions employing a plunger having a diameter of 3 mm, along with a measurement temperature of $20 \pm 2$°C, a compression speed of 10 mm/sec, and a clearance of 2.1 mm.

2) Starch mousse

Janef mousse jelly powder (plain type produced by Kewpie Egg Corporation) was put in water and lightly boiled by heating to be well dissolved. The object thus dissolved was put in a cake mold serving as a heat-proof mold, and was hardened by leaving and cooling it. The object thus hardened was cut into a size of $20 \times 20 \times 7$ mm. This resultant product was defined as a mousse-form solid body according to a present example 2.

In the process described above, the added amount of the Janef mousse jelly powder employed there was varied at weight percent concentrations of 22.4, 23.3, 24.2, 25.9, 26.8, and 39.9. The mousse-form solid bodies thus obtained respectively had hardnesses of $1.0 \times 10^4$ N/m², $1.2 \times 10^4$ N/m², $1.4 \times 10^4$ N/m², $1.8 \times 10^4$ N/m², $2.0 \times 10^4$ N/m² and $5.0 \times 10^4$ N/m². These mousse-form solid bodies were respectively defined as a sample 7, sample 8, sample 9, sample 10, sample 11, and sample 12.

The hardness of each of these mousse-form solid bodies was measured in a texture meter (TENSIPRESSER My Boy II system manufactured by Taketomo Electric Inc.). The measurement was performed under conditions employing a plunger having a diameter of 3 mm, along with a measurement temperature of 20°C, a compression speed of 10 mm/sec, and a clearance of 2.1 mm.

2. Viscous liquid

In order to perform a vibration test, a viscous liquid was prepared by use of tamarind gum. A solution of the tamarind gum has properties according to a Newtonian fluid. The tamarind gum (glyloid 3S produced by DSP Gokyo Food & Chemical Co., Ltd.) was dissolved in water by use of hand mixer. In order to settle the viscosity of the viscous liquid, the object thus dissolved was left in a refrigerator overnight, and then returned to normal temperature (20°C).
In the process described above, the added amount of the tamarind gum employed there was varied at weight percent concentrations of 0.20, 0.49, 0.78, 1.22, 1.37, 1.66, 1.95, 2.10, 2.68, 7.07, and 14.37. The viscous liquids thus obtained respectively had viscosities of 0.3 Pa·s, 0.5 Pa·s, 0.7 Pa·s, 1.0 Pa·s, 1.1 Pa·s, 1.3 Pa·s, 1.5 Pa·s, 1.6 Pa·s, 2.0 Pa·s, 5.0 Pa·s, and 10.0 Pa·s. These mousse-form solid bodies were respectively defined as a sample 13, sample 14, sample 15, sample 16, sample 17, sample 18, sample 19, sample 20, sample 21, sample 22, and sample 23.
The viscosity was measured by use of a B-type viscometer (manufactured by Toki Sangyo Co., Ltd.), (along with use of M3 rotor, 12 rpm, and 20°C).

3. Filling

Plastic cups, each having a capacity of 50 mL and including an opening and a flange formed around the opening, were used as containers. The mousse-form solid bodies of the samples 1 to 12 were respectively put in the containers, such that each of these types consisted of 4 pieces. One of the viscous liquids of the samples 13 to 23 was introduced, in an amount of 35 mL, into each of the containers. A lid formed of a film was placed on the flange of each of the containers, and was then sealed by ironing. Each of the containers had a head space of 3.8 mL. The encased mousse-form solid foods thus obtained were respectively defined as encased mousse-form solid foods.

4. Box for testing vibration

A shallow tray was partitioned by use of cardboards so that cups for nursing care foods could be placed thereon without a space between them. This tray was used as a box for testing vibration.

5. Vibration test

The box for testing vibration was placed on a vibration testing machine. The encased mousse-form solid foods manufactured by filling the containers as described above were respectively put in the spaces surrounded by the partitions inside the box for testing vibration. The box for testing vibration was capped and was then fixed to the vibration testing machine by a rope.
The vibration test conditions were set as follows:

5 Hz $\times$ 20 mm (corresponding to 1G),
Vertical vibration for 50 minutes, and
Horizontal vibration for 10 minutes.

These conditions are in line with JIS Z 0200, Packaged Freight, Evaluation Testing Method.
After the vibration test, the lid was pulled away from each of the containers, and then each of the mousse-form solid bodies was visually confirmed as to whether it had collapsed.

TABLE 2-1

| Viscosity of viscous liquid (Pa·s) | | Hardness of mousse-form solid body ($\times 10^4$ N/m$^2$) | | | | | |
|---|---|---|---|---|---|---|---|
| | | Sample 6 | Sample 5 | Sample 4 | Sample 3 | Sample 2 | Sample 1 |
| | | 5.0 | 2.0 | 1.8 | 1.4 | 1.2 | 1.0 |
| Sample 23 | 10.0 | ○ | ○ | ○ | ○ | ○ | ○ |
| Sample 22 | 5.0 | ○ | ○ | ○ | ○ | ○ | ○ |
| Sample 21 | 2.0 | ○ | ○ | ○ | ○ | ○ | ○ |
| Sample 20 | 1.6 | ○ | ○ | ○ | ○ | ○ | ○ |
| Sample 19 | 1.5 | ○ | ○ | ○ | ○ | ○ | ○ |
| Sample 18 | 1.3 | ○ | ○ | ○ | ○ | ○ | Δ |
| Sample 17 | 1.1 | ○ | ○ | ○ | ○ | Δ | Δ |
| Sample 16 | 1.0 | ○ | ○ | ○ | Δ | Δ | Δ |
| Sample 15 | 0.7 | ○ | ○ | ○ | Δ | Δ | Δ |
| Sample 14 | 0.5 | ○ | ○ | Δ | Δ | Δ | Δ |
| Sample 13 | 0.3 | ○ | Δ | × | × | × | × |

TABLE 2-2

| Viscosity of viscous liquid (Pa·s) | | Hardness of mousse-form solid body ($\times 10^4$ N/m$^2$) | | | | | |
|---|---|---|---|---|---|---|---|
| | | Sample 12 | Sample 11 | Sample 10 | Sample 9 | Sample 8 | Sample 7 |
| | | 5.0 | 2.0 | 1.8 | 1.4 | 1.2 | 1.0 |
| Sample 23 | 10.0 | ○ | ○ | ○ | ○ | ○ | ○ |
| Sample 22 | 5.0 | ○ | ○ | ○ | ○ | ○ | ○ |
| Sample 21 | 2.0 | ○ | ○ | ○ | ○ | ○ | ○ |
| Sample 20 | 1.6 | ○ | ○ | ○ | ○ | ○ | ○ |
| Sample 19 | 1.5 | ○ | ○ | ○ | ○ | ○ | ○ |
| Sample 18 | 1.3 | ○ | ○ | ○ | ○ | ○ | Δ |
| Sample 17 | 1.1 | ○ | ○ | ○ | ○ | Δ | Δ |
| Sample 16 | 1.0 | ○ | ○ | ○ | Δ | Δ | Δ |
| Sample 15 | 0.7 | ○ | ○ | ○ | Δ | Δ | Δ |
| Sample 14 | 0.5 | ○ | ○ | Δ | Δ | Δ | Δ |
| Sample 13 | 0.3 | ○ | Δ | × | × | × | × |
| ○: not collapsed Δ:slightly collapsed ×: collapsed | | | | | | | |

In any of the samples using the dried egg albumen mousses according to the present example 1 and the starch mousses according to the present example 2, the following results were observed, as described with reference to the following formulas, where H ($\times 10^4$ N/m$^2$) denotes the hardness of the mousse-form solid body and T denotes the viscosity of the viscous liquid.

Within a range of $1.0 \leq H \leq 2.0$, each mousse-form solid body did not collapse when it satisfied the following formula.

$$T \geq -H + 2.5$$

Within a range of $2.0 < H \leq 5.0$, each mousse-form solid body did not collapse when it satisfied the following formula.

$$T \geq 0.5$$

According the test described above, it has become clear that an encased mousse-form food that does not require freezing for distribution can be applied.

[Explanation of Reference Symbols]

1. Encased mousse-form solid food
2. Container
2a. Flange
3. Viscous liquid
4. Mousse-form solid body
5. Tongue portion
6. Lid

**Claims**

1. An encased mousse-form solid food (1)comprising:

   a container (2) with an opening;
   a mousse-form solid body (4) contained inside the container (2);
   a viscous liquid contained inside the container (2) and covering a circumference of the mousse-form solid body (4); and
   a lid (6) attached to the opening of the container (2),
   wherein the mousse-form solid body (4) has a hardness of $1.0 \times 10^4$ N/m$^2$ or more and $5.0 \times 10^4$ N/m$^2$ or less, and the viscous liquid has a viscosity of 0.5 Pa·s or more and 10.0 Pa·s or less, and
   wherein, where the viscosity of the viscous liquid is denoted by T [Pa·s], and the hardness of the mousse-form solid body (4) is expressed by $H \times 10^4$ [N/m$^2$],
   a following formula is satisfied within a range of $1.0 \leq H \leq 2.0$,

   $$T \geq -H + 2.5 \quad \text{(Formula I)},$$

   or
   a following formula is satisfied within a range of $2.0 < H \leq 5.0$,

   $$T \geq 0.5.$$

2. The food (1) according to claim 1, wherein the viscosity of the viscous liquid is 1.5 Pa·s or more and 2.0 Pa·s or less.

3. The food (1) according to any one of claims 1 to 2, wherein the mousse-form solid body (4) includes material particles having a diameter of 0.1 mm or less, and a binding agent for the material particles, which is at least one selected from the group consisting of egg albumen, starch, and dextrin.

4. The food (1) according to claim 3, wherein the egg albumen, the starch, and the dextrin are egg albumen, starch, and dextrin that are in a thermally denatured state.

5. The food (1) according to any one of claims 1 to 4, wherein a ratio between a total volume of the viscous liquid and a total volume of the mousse-form solid body (4) inside the container (2) is set at 2:8 to 5:5.

**6.** The food (1) according to any one of claims 1 to 5, wherein the food is a side dish.

**7.** A method for manufacturing an encased mousse-form solid food (1), the method comprising:

(a) forming a paste by grinding a material into particles having a diameter of 0.1 mm or less;
(b) mixing the paste formed in the (a) with an added matter that is at least one selected from the group consisting of egg albumen, starch, and dextrin;
(c) heating a mixture formed by mixing in the (b), thereby obtaining a mousse-form solid body (4);
(d) providing a seasoning liquid;
(e) setting the seasoning liquid to have a viscosity of 0.5 or more and 10.0 Pa·s or less, thereby preparing a viscous liquid; where the viscosity of the viscous liquid is denoted by T [Pa·s],, and the hardness of the mousse-form solid body (4) is expressed by $H \times 10^4 [N/m^2]$,,
a following formula is satisfied within a range of $1.0 \leq H \leq 2.0$,

$$T \geq -H + 2.5 \quad \text{(Formula I)},$$

or
a following formula is satisfied within a range of $2.0 < H \leq 5.0$,

$$T \geq 0.5.$$

(f) putting the viscous liquid and the mousse-form solid body (4) in a container (2); and
(g) attaching a lid (6) to the container (2).

**8.** The method according to claim 7, wherein the viscosity of the viscous liquid is 1.5 Pa·s or more and 2.0 Pa·s or less.

**9.** The method according to any one of claims 7 or 8, wherein the setting of the viscosity in the (e) includes adding a thickening stabilizer to the seasoning liquid.

**10.** The method according to any one of claims 7 to 9, wherein a ratio between a total volume of the viscous liquid and a total volume of the mousse-form solid body (4) inside the container (2) is set at 2:8 to 5:5.

**11.** The method according to any one of claims 7 to 10, wherein the encased mousse-form solid food is a side dish.

**Patentansprüche**

**1.** Verpacktes Mousse-artiges festes Nahrungsmittel (1), mit:

einem Behälter (2) mit einer Öffnung;
einem Mousse-artigen festen Körper (4), der in dem Behälter (2) enthalten ist;
einer viskosen Flüssigkeit, die in dem Behälter (2) enthalten ist und einen Umfang des Mousse-artigen festen Körpers (4) bedeckt; und
einem Deckel (6), der an der Öffnung des Behälters (2) befestigt ist,
wobei der Mousse-artige feste Körper (4) eine Festigkeit von $1,0 \times 10^4$ N/m$^2$ oder mehr und $5,0 \times 10^4$ N/m$^2$ oder weniger aufweist, und die viskose Flüssigkeit eine Viskosität von 0,5 Pa·s oder mehr und 10,0 Pa·s oder weniger aufweist, und
wobei eine folgende Formel im Bereich $1,0 \leq H \leq 2,0$ erfüllt ist,

$$T \geq -H + 2,5 \quad \text{(Formel I)},$$

oder
eine folgende Formel im Bereich von $2,0 < H \leq 5,0$ erfüllt ist,

$$T \geq 0{,}5,$$

wobei
die Viskosität der viskosen Flüssigkeit als T [Pa·s], und die Festigkeit des Mousse-artigen festen Körpers (4) als H x $10^4$ [N/m$^2$] ausgedrückt wird.

2. Nahrungsmittel (1) gemäß Anspruch 1, wobei die Viskosität der viskosen Flüssigkeit 1,5 Pa·s oder mehr und 2,0 Pa·s oder weniger beträgt.

3. Nahrungsmittel gemäß einem der Ansprüche 1 bis 2, wobei der Mousse-artige feste Körper (4) Materialpartikel umfasst, die einen Durchmesser von 0,1 mm oder weniger aufweisen, und ein Bindemittel für die Materialpartikel aufweist, welches zumindest eines, ausgewählt aus der Gruppe Ei-Albumin, Stärke und Dextrin, ist.

4. Nahrungsmittel (1) gemäß Anspruch 3, wobei das Ei-Albumin, die Stärke, und das Dextrin in einem thermisch denaturierten Zustand vorliegen.

5. Nahrungsmittel (1) gemäß einem der Ansprüche 1 bis 4, wobei das Verhältnis zwischen dem Gesamtvolumen der viskosen Flüssigkeit und dem Gesamtvolumen des Mousse-artigen festen Körpers (4) innerhalb des Behälters (2) 2:8 bis 5:5 beträgt.

6. Nahrungsmittel (1), gemäß einem der vorstehenden Ansprüche 1 bis 5, wobei das Nahrungsmittel eine Beilage ist.

7. Verfahren zur Herstellung eines verpackten Mousse-artigen festen Nahrungsmittels (1), mit den Schritten:

   (a) Bilden einer Paste durch Mahlen eines Materials zu Partikeln mit einem Durchmesser von 0,1 mm oder weniger;
   (b) Mischen der in Schritt (a) gebildeten Paste mit einem zusätzlichen Stoff, der zumindest einer ausgewählt aus der Gruppe Ei-Albumin, Stärke und Dextrin, ist;
   (c) Erhitzen einer in Schritt (b) enthaltenen Mischung, wobei ein Mousse-artiger fester Körper (4) erhalten wird;
   (d) Bereitstellen einer Würzflüssigkeit;
   (e) Einstellen der Würzflüssigkeit, sodass sie eine Viskosität von 0,5 Pa·s oder mehr und 10,0 Pa·s oder weniger aufweist, um eine viskose Flüssigkeit zu erhalten; wenn die Viskosität der viskosen Flüssigkeit mit T [Pa·s] bezeichnet wird, und die Festigkeit des Mousse-artigen festen Körpers (4) als H x $10^4$ [N/m$^2$] ausgedrückt wird, wird eine folgende Formel im Bereich von $1{,}0 \leq H \leq 2{,}0$ erfüllt,

$$T \geq -H + 2{,}5 \ \text{(Formel I)},$$

   oder
   eine folgende Formel im Bereich von $2{,}0 < H \leq 5{,}0$ erfüllt,

$$T \geq 0{,}5.$$

   (f) Füllen der viskosen Flüssigkeit und des Mousse-artigen festen Körpers (4) in einen Behälter (2); und
   (g) Befestigen eines Deckels (6) an dem Behälter (2).

8. Verfahren nach Anspruch 7, wobei die Viskosität der viskosen Flüssigkeit 1,5 Pa·s oder mehr und 2,0 Pa·s oder weniger beträgt.

9. Verfahren nach einem der Ansprüche 7 oder 8, wobei das Einstellen der Viskosität in Schritt (e) das Hinzufügen eines verdickenden Stabilisators zu der Würzflüssigkeit umfasst.

10. Verfahren nach einem der Ansprüche 7 bis 9, wobei ein Verhältnis zwischen einem Gesamtvolumen der viskosen Flüssigkeit und einem Gesamtvolumen des Mousse-artigen festen Körpers (4) innerhalb des Behälters (2) 2:8 bis 5:5 beträgt.

**11.** Verfahren gemäß einem der Ansprüche 7 bis 10, wobei das verpackte Mousse-artige feste Nahrungsmittel eine Beilage ist.

**Revendications**

1. Aliment solide enrobé sous forme de mousse (1) comprenant :

   un récipient (2) ayant une ouverture ;
   un corps solide en forme de mousse (4) contenu à l'intérieur du récipient (2) ;
   un liquide visqueux contenu à l'intérieur du récipient (2) et couvrant une circonférence du corps solide en forme de mousse (4) ; et
   un couvercle (6) fixé à l'ouverture du récipient (2),
   dans lequel le corps solide en forme de mousse (4) a une dureté supérieure ou égale à 1,0 x $10^4$ N/m² et inférieure ou égale à 5,0 x $10^4$ N/m², et le liquide visqueux a une viscosité supérieure ou égale à 0,5 Pa.s et inférieure ou égale à 10,0 Pa.s, et
   dans lequel, lorsque la viscosité du liquide visqueux est désignée par T [Pa.s], et la dureté du corps solide en forme de mousse (4) est exprimée par Hx$10^4$ [N/m²],
   la formule suivante est satisfaite dans une plage de 1,0≤H≤2,0, 26

$$T \geq -H + 2,5 \text{ (Formule I)},$$

   ou
   la formule suivante est satisfaite dans une plage de 2,0<H≤5,0,

$$T \geq 0,5.$$

2. Aliment (1) selon la revendication 1, dans lequel la viscosité du liquide visqueux est supérieure ou égale à 1,5 Pa.s et inférieure ou égale à 2,0 Pa.s.

3. Aliment (1) selon l'une quelconque des revendications 1 et 2, dans lequel le corps solide en forme de mousse (4) comporte des particules de matériau ayant un diamètre inférieur ou égal à 0,1 mm, et un agent de liaison pour les particules de matériau, qui est au moins un élément choisi dans le groupe constitué par l'albumine d'oeuf, l'amidon et la dextrine.

4. Aliment (1) selon la revendication 3, dans lequel l'albumine d'oeuf, l'amidon et la dextrine sont l'albumine d'oeuf, l'amidon et la dextrine qui sont dans un état dénaturé thermiquement.

5. Aliment (1) selon l'une quelconque des revendications 1 à 4, dans lequel un rapport entre un volume total du liquide visqueux et un volume total du corps solide en forme de mousse (4) à l'intérieur du récipient (2) est réglé entre 2:8 et 5:5.

6. Aliment (1) selon l'une quelconque des revendications 1 à 5, dans lequel l'aliment est un plat d'accompagnement.

7. Procédé de fabrication d'un aliment solide enrobé sous forme de mousse (1), le procédé comprenant le fait :

   (a) de former une pâte en broyant un matériau en particules ayant un diamètre inférieur ou égal à 0,1 mm ;
   (b) de mélanger la pâte formée dans (a) avec une matière ajoutée qui est au moins une matière choisie dans le groupe constitué par l'albumine d'oeuf, l'amidon et la dextrine ;
   (c) de chauffer un mélange formé par le mélange dans (b), obtenant ainsi un corps solide en forme de mousse (4) ;
   (d) de fournir un liquide d'assaisonnement ;
   (e) de régler la viscosité du liquide d'assaisonnement pour être supérieure ou égale à 0,5 et inférieure ou égale à 10,0 Pa.s, préparant ainsi un liquide visqueux ; où la viscosité du liquide visqueux est désignée par T [Pa.s], et la dureté du corps solide en forme de mousse (4) est exprimée par Hx$10^4$ [N/m²],
   la formule suivante est satisfaite dans une plage de 1,0≤H≤2,0,

$$T \geq -H + 2,5 \text{ (Formule I)},$$

ou
la formule suivante est satisfaite dans une plage de 2,0<H≤5,0,

$$T \geq 0,5.$$

(f) de mettre le liquide visqueux et le corps solide en forme de mousse (4) dans un récipient (2) ; et
(g) de fixer un couvercle (6) au récipient (2).

**8.** Procédé selon la revendication 7, dans lequel la viscosité du liquide visqueux est supérieure ou égale à 1,5 Pa.s et inférieure ou égale à 2,0 Pa.s.

**9.** Procédé selon l'une quelconque des revendications 7 et 8, dans lequel le réglage de la viscosité dans (e) comporte l'ajout d'un stabilisant épaississant au liquide d'assaisonnement.

**10.** Procédé selon l'une quelconque des revendications 7 à 9, dans lequel un rapport entre un volume total du liquide visqueux et un volume total du corps solide en forme de mousse (4) à l'intérieur du récipient (2) est réglé entre 2:8 et 5:5.

**11.** Procédé selon l'une quelconque des revendications 7 à 10, dans lequel l'aliment solide enrobé sous forme de mousse est un plat d'accompagnement.

(a)

(b)

(c)

F I G. 1

FIG. 2

F I G. 3

**EP 2 832 239 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005229879 A
- JP 2005287326 A
- JP 2006055076 A
- JP 2006304719 A